# EUROPÄISCHE PATENTSCHRIFT

(11) **EP 4 003 692 B1**
(45) Veröffentlichungstag und Bekanntmachung des Hinweises auf die Patenterteilung: **20.09.2023**
(21) Anmeldenummer: 20788723.3
(22) Anmeldetag: 28.09.2020
(51) Int. Cl.: B29C 49/54, B29C 49/56, B29C 49/48, B29L 31/00, B29C 49/04

(54) **SCHLIESSEINHEIT FÜR EINE BLASFORMMASCHINE**
CLOSING UNIT FOR A BLOW-MOULDING MACHINE
UNITÉ DE FERMETURE POUR UNE MACHINE DE MOULAGE PAR SOUFFLAGE

(30) Priorität: 30.09.2019 DE 102019126397
(43) Veröffentlichungstag der Anmeldung: 01.06.2022
(73) Patentinhaber: Kautex Maschinenbau GmbH, 53229 Bonn (DE)
(72) Erfinder: BLÖMER, Michael, 53179 Bonn (DE)
(74) Vertreter: ERNICKE Patent- und Rechtsanwälte PartmbB
(86) Internationale Anmeldenummer: PCT/EP2020/077060
(87) Internationale Veröffentlichungsnummer: WO 2021/063867

(56) Entgegenhaltungen:
- JP-A- H0 825 469
- US-A- 3 753 641
- US-A- 5 227 114
- US-B1- 7 754 138

## Beschreibung

Die Offenbarung betrifft eine Schließeinheit für eine Blasformmaschine mit einem ersten und zweiten Formträger und ein an der Schließeinheit angeordnetes Blasformwerkzeug mit zwei Werkzeughälften, wobei jede Werkzeughälfte an einem der beiden Formträger lösbar befestigt ist und ein Form-oberteil und ein Formunterteil aufweist, die beiden Werkzeughälften zwischen einem Offenzustand und einen Schließzustand in einer ersten Bewegungsrichtung hin- und her bewegbar sind, das Formunterteil jeder Werkzeughälfte gegenüber dem Formoberteil jeder Werkzeughälfte in einer zur ersten Bewegungsrichtung verschiedenen zweiten Bewegungsrichtung zwischen einem Offenzustand und einem Schließzustand mittels mindestens eines ersten bzw. mindestens eines zweiten Aktuators hin und her bewegbar ist und das Blasformwerkzeug im Schließzustand der beiden Werkzeughälften ein Formnest mit Hinterschneidungen begrenzt, wenn sich die beiden Formunterteile ebenfalls im Schließzustand befinden.

Die Offenbarung betrifft die Herstellung von Hohlkörpern im Wege des Blasformens, insbesondere die Herstellung von Behältern aus Kunststoff, wie beispielsweise Kanistern oder Flaschen. Bei der Her-stellung derartiger Hohlkörper im Wege des Blasformens erzeugt beispielsweise ein Extruder mit einem Blaskopf einen schlauchförmigen Vorformling, der von dem Blasformwerkzeug umschlossen und mit mittels eines Blasdorns eingebrachter Druckluft derart aufgeweitet wird, dass der betreffende Hohlkörper die Innenkontur des Blasformwerkzeugs erhält. Die beiden Werkzeughälften sind in der Regel in horizontaler Richtung mittels einer Schließeinheit gegeneinander verfahrbar, um das Blas-formwerkzeug zu öffnen oder zu schließen. Der Aufbau einer derartigen Schließeinheit wird beispielsweise in der DE 102012 109 499 A1 offenbart.

In der Praxis können die herzustellenden Behälter an der Unter- und/oder Oberseite Vertiefungen aufweisen, beispielsweise zur Ausbildung eines gewölbten Behälterbodens oder eines Griffbereichs. Die Vertiefungen stellen gegenüber einem seitlichen Entformen der Behälter aus den Werkzeughälften eine Hinterschneidung dar. Aus diesem Grund sind aus dem Stand der Technik zweiteilige Werkzeughälften eines Blasformwerkzeugs bekannt, deren untere Bodenhälfte gegenüber einem Form-oberteil der Werkzeughälfte absenkbar ist. Zum Entformen des Behälters wird die untere Bodenhälfte jeder Werkzeughälfte separat über mindestens einen Hydraulikzylinder abgesenkt und anschließend für einen neuen Herstellungszyklus eines Behälters wieder angehoben.

Bei einem ersten in der Praxis verwendeten Blasformwerkzeug sind jeweils zwei Hydraulikzylinder seitlich neben dem Formoberteil an einem Gestell der Werkzeughälfte befestigt und abtriebsseitig über die Kolbenstange mit der Bodenhälfte verbunden. Bei einem zweiten in der Praxis verwendeten Blasformwerkzeug ist lediglich ein Hydraulikzylinder an dem Gestell der Werkzeughälfte unterhalb der unteren Bodenhälfte befestigt und abtriebsseitig über die Kolbenstange mit der Unterseite der Bodenhälfte verbunden.

Der Nachteil des ersten Blasformwerkzeugs besteht darin, dass zwei Aktuatoren je Werkzeughälfte erforderlich sind und die sich aus deren Anordnung ergebende Baubreite des Blasformwerkzeugs Probleme bereiten kann. Bei dem zweiten Blasformwerkzeug ist ein seitlicher Wechsel des Blasformwerkzeugs nicht möglich.

US 3,753,641 A offenbart eine Anlage zur Herstellung von Flaschen mit einer Mehrzahl von Blasformwerkzeugen, die in einer Rotationsbahn geführt sind. Jedes Blasformwerkzeug besteht aus einer äußeren Formhälfte und einer inneren Formhälfte. Die äußere Formhälfte ist auf einer kreisringförmigen Nockenbahn geführt und kann je nach Phasenlage auf der Nockenbahn an die innere Formhälfte in Radialrichtung herangeführt oder von der inneren Formhälfte in Radialrichtung entfernt werden. Jeweils an der äußeren Formhälfte und der inneren Formhälfte ist eine Mechanik mit einem doppelt aktuierten Zylinder und einem Getriebe angeordnet, die auf ein jeweils bewegliches Formendstück der äußere Formhälfte oder innen Formhälfte einwirken, um dieses zu bewegen. Die Formendstücke sind über Zapfenverbindungen fest mit der Mechanik verbunden. Die Mechanik weist für jedes Formendstück ein Paar von Schienen auf, die fest an der jeweiligen Formhälfte angeordnet sind.

Weitere Blasformeinrichtungen sind aus JP H 0825469, US 7,754,138 B1 und US 5,227,114 A.

Die US 5,026,268 A offenbart eine Blasformanlage zum gleichzeitigen Blasformen von zwei Pflanz-kübeln, deren Randbereiche formgepresst werden. Jede Werkzeughälfte des Blasformwerkzeuges weist insgesamt fünf Formteile auf. Die jeweils beiden unteren und oberen Formteile jeder Werkzeughälfte sind starr miteinander verbunden und wiederum starr an einer Basis der jeweiligen Form-hälfte befestigt. Diese Basis ist Bestandteil des Blasformwerkzeuges und bildet das Gestell jeder der beiden Werkzeughälften. An diesem Gestell des Blasformwerkzeuges ist jeweils ein Hydraulikzylinder befestigt, der über eine Kolbenstange mit den beiden unteren Formteilen verbunden ist. Die fest miteinander verbundenen unteren Formteile jeder Werkzeughälfte sind zu einem dazwischen liegen-den Formteil relativ in Richtung einer die Formteile verbindenden Führungsstange beweglich. Das dazwischen liegende Formteil ist relativ zu den beiden fest mit der Basis jeder Formhälfte verbundenen oberen Formteilen in Richtung einer weiteren Führungsstange beweglich. Diese Relativbewegung erlaubt das Formpressen des Randbereichs der beiden Pflanzkübel.

Die Aktuatoren können maschinenseitig bauraumoptimiert in einem für das Blasformwerkzeug nicht oder nur eingeschränkt nutzbaren Raum positioniert werden. Vorzugsweise sind die Aktuatoren unterhalb der Formunterteile angeordnet und lösbar mit der Unterseite des jeweiligen Formunterteiles verbunden.

Wenn der mindestens eine Aktuator unterhalb des Formunterteils angeordnet und lösbar mit der Unterseite des Formunterteils verbindbar ist, lässt sich das Blasformwerkzeug seitlich, das heißt quer zur Schließrichtung der beiden Werkzeughälften, aus der Schließeinheit entnehmen.

Der mindestens eine erste Aktuator und der mindestens eine zweite Aktuator sind in der ersten Bewegungsrichtung gegeneinander beweglich an der Schließeinheit angeordnet.

Um die Aktuatoren bereits während der Bewegung der Werkzeughälften in der ersten Bewegungsrichtung betätigen zu können, ist in einer bevorzugten Ausführung der Erfindung vorgesehen, dass sich der mindestens eine erste Aktuator synchron mit dem ersten Formträger bewegt und sich der mindestens eine zweite Aktuator synchron mit dem zweiten Formträger bewegt.

Zur Synchronsierung der Bewegung kann in einer Ausgestaltung der Erfindung an dem ersten Formträger der mindestens eine erste Aktuator und an dem zweiten Formträger der mindestens eine zweite Aktuator unmittelbar angeordnet sein. An dem ersten Formträger kann eine Befestigungskonsole zur mittelbaren Befestigung des mindestens einen ersten Aktuators und an dem zweiten Formträger eine Befestigungskonsole zur mittelbaren Befestigung des mindestens einen zweiten Aktuators angeordnet sein.

Um die Bewegung zu synchronisieren ist einer weiteren Ausführungsform der Erfindung vorgesehen, dass
- der mindestens eine erste Aktuator und der mindestens eine zweite Aktuator entlang mindestens einer ortsfesten Längsführung beweglich an der Schließeinheit angeordnet sind,
- eine erste Koppel die Bewegung des ersten Formträgers auf den mindestens einen ersten Aktuator und eine zweite Koppel die Bewegung des zweiten Formträgers auf den mindestens einen zweiten Aktuator überträgt.

Als Koppel kommt beispielsweise eine Koppelstange oder ein Trägerelement in Betracht.

Als ortsfeste Längsführung für die Aktuatoren kann eine an der Schließeinheit vorhandene ortsfeste Führung verwendet werden, entlang der auch der erste und der zweite Formträger verschieblich geführt sind. Alternativ ist eine separate ortsfeste Längsführung für die Aktuatoren vorgesehen.

Mittels der lösbaren Verbindung zwischen Aktuator und Formunterteil wird eine definierte Schnittstelle für die Kraftübertragung geschaffen. Um die Verbindung zwischen Aktuator und Formunterteil schnell lösen und wieder herstellen zu können, ist die lösbare Verbindung in einer vorteilhaften Ausgestaltung der Erfindung als Kupplung ausgeführt, die für die Übertragung von Kräften zwischen dem Aktuator und dem Formunterteil zumindest in der zweiten Bewegungsrichtung, das heißt senkrecht zu der horizontalen Schließ- und Öffnungsbewegung der beiden Werkzeughälften eingerichtet ist.

Im Interesse einer Automatisierung des Kupplungsvorgangs ist die Kupplung vorzugsweise als schaltbare, kraft- oder formschlüssige Kupplung ausgeführt, beispielsweise als elektromagnetische Kupplung.

Die Aktuatoren sind derart eingerichet, dass sie das Formunterteil in der zweiten Bewegungsrichtung linear zwischen dem Offenzustand und dem Schließzustand hin- und herbwegen können. Die Aktuatoren können als Linearantriebe ausgeführt sein, insbesondere als fluidbetriebene Arbeitszylinder. Alternativ ist der Aktuator ein Schubkurbelgetriebe, das eine Drehbewegung in
eine oszillierende Schubbewegung in der zweiten Bewegungsrichtung umformt.

Die zweite Bewegungsrichtung der Formunterteile ist üblicherweise senkrecht zu der ersten Bewegungsrichtung zum Öffnen und Schließen des Blasformwerkzeugs, kann jedoch abhängig von dem herzustellenden Hohlkörper auch unter einem anderen Winkel verlaufen.

Nachfolgend wird die Erfindung anhand der Figuren näher erläutert. Es zeigen
- **Figur 1**: eine Seiteneinsicht einer ersten Ausführungsform einer Schließeinheit für eine Blasformmaschine,
- **Figur 2**: einen Längsschnitt durch die Schließeinheit nach Figur 1,
- **Figur 3**: eine perspektivische Ansicht der Schließeinheit nach Figur 1,
- **Figur 4**: eine Seiteneinsicht einer zweiten Ausführungsform einer Schließeinheit für eine Blasformmaschine,
- **Figur 5**: eine Draufsicht auf die Schließeinheit nach Figur 4,
- **Figur 6**: eine perspektivische Ansicht der Schließeinheit nach Figur 4,
- **Figur 7**: eine Seiteneinsicht, teilweise weggebrochen, einer zweiten Ausführungsform einer Schließeinheit für eine Blasformmaschine,
- **Figur 8**: eine Draufsicht auf die Schließeinheit nach Figur 7 sowie
- **Figur 9**: eine perspektivische Ansicht der Schließeinheit nach Figur 7.

Hinsichtlich des Aufbaus der Schließeinheit (1) der vorliegenden Erfindung, insbesondere des gemeinsamen Antriebs zum Hin- und Herbewegen der Formträger, des Grundrahmens mit daran angeordneten Führungen, der U-förmigen Rahmenelemente sowie der Gleichlaufeinrichtung wird ergänzend auf die DE 10 2012 109 499 A1 Bezug genommen.

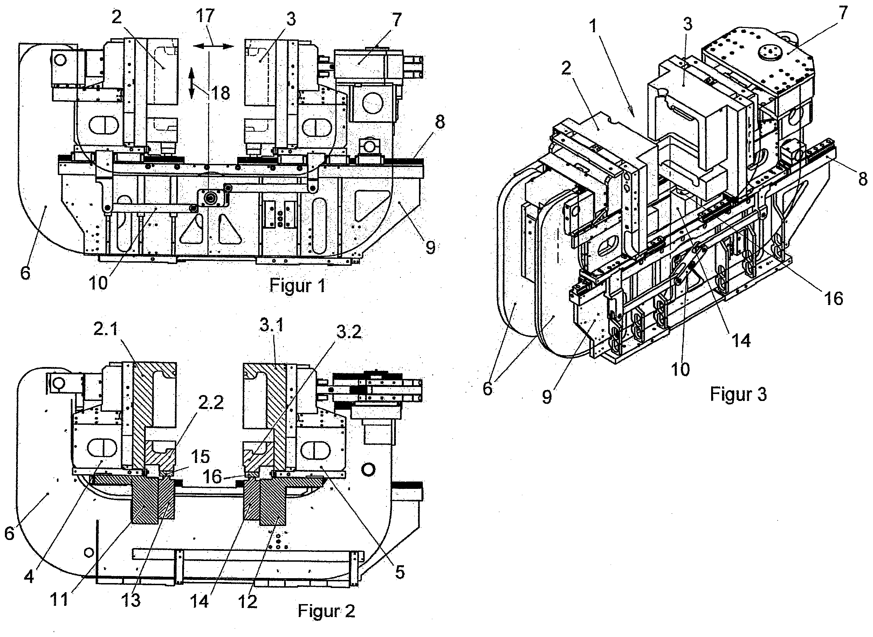

Die Figuren 1 - 3 zeigen eine erste Ausführungsform der Schließeinheit 1 für eine Blasformmaschine mit einem Blasformwerkzeug mit zwei Werkzeughälften (2,3), wobei jede Werkzeughälfte (2,3) ein Formoberteil (2.1, 3.1) und ein Formunterteil (2.2, 3.2) aufweist. Die Werkzeughälfte (2) ist an einem ersten Formträger (4) und die Werkzeughälfte (3) an einem zweiten Formträger (5) lösbar befestigt. Der erste Formträger (4) ist gelenkig mit den beiden Rahmenelementen (6) der Schließeinheit (1) verbunden. Der zweite Formträger (5) ist mit einem Antrieb (7) zum Hin- und Herbewegen der beiden Formträger (4,5) und damit der Werkzeughälften (2,3) verbunden, wobei sich der Antrieb (7) ebenfalls an den Rahmenelementen (6) abstützt.

Die Schließeinheit (1) weist einen Grundrahmen auf, der im parallelen Abstand zueinander angeordnete Seitenwangen (9) aufweist, an deren obere Kante jeweils eine Längsführung (8) angeordnet ist. Der erste und zweite Formträger (4,5) und der Antrieb (7) sind mit Führungselementen verbunden, die auf den Längsführungen (8) verschieblich angeordnet sind. An dem Grundrahmen der Schließeinheit (1) ist zudem eine Gleichlaufeinrichtung (10) angeordnet, durch welche die Schließ- und Öffnungsbewegung der beiden Werkzeughälften (2,3) in einer ersten Bewegungsrichtung (17) symmetrisch erfolgt.

Die Figuren 1 - 3 zeigen die beiden Werkzeughälften (2,3) in einem Offenzustand. Die Formunterteile (2.2, 3.2) befinden sich ebenfalls in einem Offenzustand. Im Schließzustand liegen die beiden Werkzeughälften (2,3) sowie die jeweiligen Formober- und Unterteile (2.1, 2.2 bzw. 3.1, 3.2) aneinander an und begrenzen ein Formnest zur Herstellung eines Hohlkörpers, insbesondere eines Kanisters.

An dem ersten Formträger (4) und an dem zweiten Formträger (5) ist jeweils an der Unterseite eine Befestigungskonsole (11,12) befestigt. An jeder Befestigungskonsole (11,12) ist unterhalb des Formunterteils (2.2, 3.2) jeweils ein erster Aktuator (13) bzw. ein zweiter Aktuator (14) befestigt. Über eine schaltbare Kupplung (15,16) ist der erste Aktuator (13) und der zweite Aktuator (14) jeweils mit der Unterseite des zugeordneten Formunterteils (2.2, 3.2) lösbar verbindbar.

Mittels des beispielsweise als Linearantrieb ausgeführten Aktuators (13,14) lassen sich die Formunterteile (2.2,3.2) gegenüber den Formoberteilen (2.1,3.1) der beiden Werkzeughälften (2,3) in einer zweiten Bewegungsrichtung (18) in senkrechter Richtung bewegen, um das Formunterteil (2.2, 3.2) jeder Werkzeughälfte (2,3) gegenüber dem Formoberteil (2.1) der jeweiligen Werkzeughälfte (2,3)zwischen einem Offenzustand und einem Schließzustand hin- und herzubewegen. Die zweite Bewegungsrichtung (18) verläuft senkrecht zu der ersten Bewegungsrichtung (17).

Aus Figur 2 ist erkennbar, dass sowohl die beiden Formoberteile (2.1,3.1) und die beiden Formunterteile (2.2,3.2) Formbereiche aufweisen, die zur Ausbildung von Vertiefungen an der Unter- und Oberseite des herzustellenden Hohlkörpers ausgebildet sind. Diese Formbereiche erfordern es, dass die Formunterteile (2.2,3.2) vor dem Entformen des Hohlkörperes in einem Offenzustand mittels der Aktuatoren (13,14) gebracht werden.

Aufgrund der Anordnung der Aktuatoren (13,14) in dem Zwischenraum zwischen den Rahmenelementen (6) wird der Formaufspannbereich nicht beeinträchtigt. Des Weiteren begünstigen die an der Unterseite der Formunterteile (2.2,3.2) angreifenden Kupplungen (15,16) den Wechsel des Blasformwerkszeugs. Schließlich zeigen die Figuren, dass der Produktionsfreiraum für die Hohlkörper nicht durch die Aktuatoren (13,14) eingeschränkt wird.

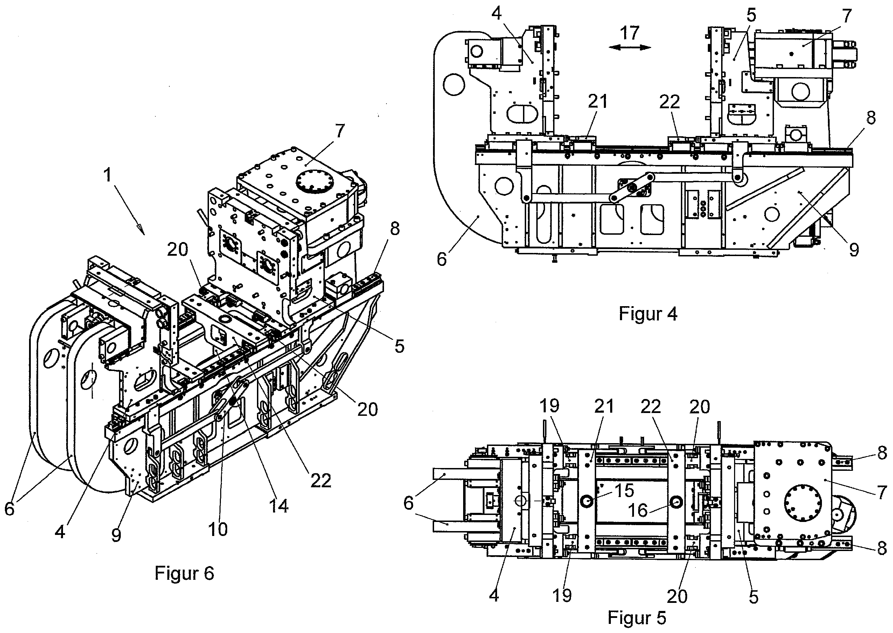

Die Figuren 4 - 6 zeigen eine zweite Ausführungsform der Schließeinheit (1) für eine Blasformmaschine mit einem Blasformwerkzeug, die im Aufbau mit der Schließeinheit (1) nach den Figuren 1 - 3 weitgehend übereinstimmt. Übereinstimmende Bauteile und Baugruppen der zweiten Ausführungsform sind mit gleichen Bezugszeichen versehen. Unterschiede zu der ersten Ausführungsform bestehen insoweit, wie sich der erste Aktuator (13) synchron mit dem ersten Formträger (4) und der zweite Aktuator (14) synchron mit dem zweiten Formträger (5) bewegt. In den Darstellungen nach Figuren 4 - 6 wurden die Werkzeughälften (2,3) nicht dargestellt, um die für die synchrone Bewegung erforderlichen Bauteile besser darstellen zu können.

Das Schließeinheit (1) weist wie bei der ersten Ausführungsform einen Grundrahmen auf, der im parallelen Abstand zueinander angeordnete Seitenwangen (9) aufweist, an deren obere Kante jeweils eine Längsführung (8) angeordnet ist. Der erste und zweite Formträger (4,5) und der Antrieb (7) sind mit Führungselementen verbunden, die auf den Längsführungen (8) verschieblich angeordnet sind.

Um die Bewegung zu synchronisieren ist vorgesehen, dass der erste Aktuator (13) und der zweite Aktuator (14) ebenfalls entlang der ohnehin vorhandenen ortsfesten Längsführungen (8) beweglich an der Schließeinheit (1) angeordnet sind und eine erste Koppel (19) die Bewegung des ersten Formträgers (4) auf den ersten Aktuator (13) und eine zweite Koppel (20) die Bewegung des zweiten Formträgers (5) auf den zweiten Aktuator (14) überträgt.

Um den ersten und zweiten Aktuator (13,14) entlang der Längsführungen (8) zu bewegen, sind eine erste und eine zweite Konsole (21,22) vorgesehen. Jede der beiden Konsolen (21,22) ist an den äußeren Rändern mit Führungselementen versehen, die auf den im parallelen Abstand angeordneten Längsführungen (8) verschieblich angeordnet sind. An der ersten Konsole (21) ist mittig der erste Aktuator (13) und an der zweiten Konsole mittig der zweite Aktuator (14) befestigt. Die erste Koppel (19) umfasst zwei Profilstücke, die einerseits an dem ersten Formträger (4) und andererseits an den äußeren Rändern der ersten Konsole (21) befestigt sind. Die zweite Koppel (20) umfasst ebenfalls zwei Profilstücke, die einerseits an dem zweiten Formträger (5) und andererseits an den äußeren Rändern der zweiten Konsole (22) befestigt sind.

Bewegen sich nun die Formträger (4,5) in der ersten Bewegungsrichtung (17) werden die erste und zweite Konsole (21,22) synchron mit bewegt, sodass sich die an den Konsolen (21,22) befestigten Aktuatoren (13,14) stets unterhalb der Formunterteile (2.2, 3.2) befinden.

Über die schaltbare Kupplung (15,16) ist der erste Aktuator (13) und der zweite Aktuator (14) jeweils mit der Unterseite des zugeordneten Formunterteils (2.2,3.2) lösbar verbindbar.

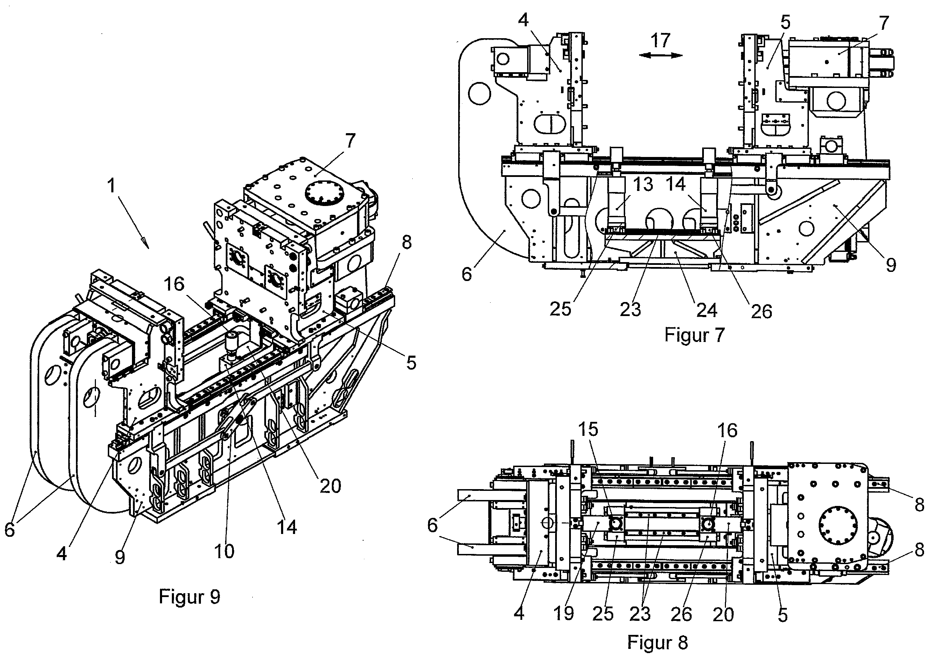

Die Figuren 7 - 9 zeigen eine dritte Ausführungsform der Schließeinheit (1) für eine Blasformmaschine mit einem Blasformwerkzeug, die im Aufbau mit der Schließeinheit nach Figuren 1 - 3 weitgehend übereinstimmt. Übereinstimmende Bauteile und Baugruppen der dritten Ausführungsform sind mit gleichen Bezugszeichen versehen. Unterschiede zu der ersten Ausführungsform bestehen insoweit, wie sich der erste Aktuator (13) synchron mit dem ersten Formträger (4) und der zweite Aktuator (14) synchron mit dem zweiten Formträger (5) bewegt. In den Darstellungen nach Figuren 7 - 9 wurden die Werkzeughälften (2,3) nicht dargestellt, um die für die synchrone Bewegung erforderlichen Bauteile besser darstellen zu können.

Das Schließeinheit (1) weist wie bei der ersten Ausführungsform einen Grundrahmen auf, der im parallelen Abstand zueinander angeordnete Seitenwangen (9) aufweist, an deren obere Kante jeweils eine Längsführung (8) angeordnet ist. Der erste und zweite Formträger (4,5) und der Antrieb (7) sind mit Führungselementen verbunden, die auf den Längsführungen (8) verschieblich angeordnet sind.

Um die Bewegung zu synchronisieren ist vorgesehen, dass der erste Aktuator (13) und der zweite Aktuator (14) entlang zusätzlicher ortsfester Längsführungen (23) beweglich an der Schließeinheit (1) angeordnet sind. Die ortsfesten Längsführungen (23) sind im parallelen Abstand zueinander in dem Zwischenraum zwischen den Seitenwangen (9) und den Rahmenelementen (6) auf einer Tragkonstruktion (24) angeordnet, die an dem Grundrahmen der Schließeinheit (1) bodenseitig befestigt ist.

Die erste Koppel (19) überträgt die Bewegung des ersten Formträgers (4) auf den ersten Aktuator (13) und die zweite Koppel (20) die Bewegung des zweiten Formträgers (5) auf den zweiten Aktuator (14).

Um den ersten und zweiten Aktuator (13,14) entlang der zusätzlichen Längsführungen (23) zu bewegen, sind eine erster und eine zweiter Führungswagen (25,26) vorgesehen, die auf den im parallelen Abstand angeordneten, zusätzlichen Längsführungen (23) verschieblich geführt sind. Von dem ersten Führungswagen (25) erstreckt sich in senkrechter Richtung nach oben der erste Aktuator (13) und von dem zweiten Führungswagen (26) erstreckt sich in senkrechter Richtung nach oben der zweite Aktuator (14). Die erste Koppel (19) umfasst ein Winkelprofil, das einerseits an dem ersten Formträger (4) und andererseits an dem ersten Aktuator (13) befestigt ist. Die zweite Koppel (20) umfasst ein Winkelprofil, das einerseits an dem zweiten Formträger (5) und andererseits an dem zweiten Aktuator (14) befestigt ist.

Bewegen sich die Formträger (4,5) in der ersten Bewegungsrichtung (17) werden die an den Führungswagen (25,26) angeordneten Aktuatoren (13,14) synchron mit bewegt.

Über die schaltbare Kupplung (15,16) ist der erste Aktuator (13) und der zweite Aktuator (14) jeweils mit der Unterseite des zugeordneten Formunterteils (2.2,3.2) lösbar verbindbar.

### Bezugszeichenliste

- 1: Schließeinheit
- 2: Werkzeughälfte
- 2.1: Formoberteil
- 2.2: Formunterteil
- 3: Werkzeughälfte
- 3.1: Formoberteil
- 3.2: Formunterteil
- 4: Erster Formträger
- 5: Zweiter Formträger
- 6: Rahmenelemente
- 7: Antrieb
- 8: Längsführung
- 9: Seitenwangen
- 10: Gleichlaufeinrichtung
- 11: Befestigungskonsole
- 12: Befestigungskonsole
- 13: Erster Aktuator
- 14: Zweiter Aktuator
- 15: Kupplung
- 16: Kupplung
- 17: Erste Bewegungsrichtung
- 18: Zweite Bewegungsrichtung
- 19: Erste Koppel
- 20: Zweite Koppel
- 21: Erste Konsole
- 22: Zweite Konsole
- 23: Zusätzliche Längsführung
- 24: Tragkonstruktion
- 25: Erster Führungswagen
- 26: Zweiter Führungswagen

## Patentansprüche

1. Schließeinheit für eine Blasformmaschine, wobei in der Blasformmaschine mindestens ein Blasformwerkzeug mit zweiteiligen Werkzeughälften (2, 3) verwendbar ist, das im Schließzustand der beiden Werkzeughälften (2, 3) ein Formnest mit Hinterschneidungen begrenzt, und wobei die Schließeinheit (1) einen ersten und einen zweiten Formträger (4, 5) umfasst, an denen das Blasformwerkzeug anordenbar und lösbar befestigbar ist, und wobei jeweils ein Formunterteil (2.2, 3.3) der Werkzeughälfte, d.h. die untere Bodenhälfte, gegenüber einem Formoberteil (2.1, 3.1) der Werkzeughälfte absenkbar ist, und wobei die beiden Werkzeughälften (2, 3) zwischen einem Offenzustand und einem Schließzustand in einer ersten Bewegungsrichtung (17) hin und her bewegbar sind, und wobei die Schließeinheit (1) mindestens einen ersten Aktuator (13) und mindestens einen zweiten Aktuator (14) umfasst, und wobei das Formunterteil (2.2, 3.2) jeder Werkzeughälfte gegenüber dem Formoberteil (2.1, 3.1) mittels des mindestens einen ersten Aktuators (13) oder mittels des mindestens einen zweiten Aktuators (14) zwischen einem Offenzustand und einem Schließzustand in einer zweiten Bewegungsrichtung (18) hin und her bewegbar ist, die von der ersten Bewegungsrichtung (17) verschieden ist, **dadurch gekennzeichnet, dass**
- die Aktuatoren (13, 14) an der Schließeinheit (1) angeordnet sind und bei einem Wechsel des Blasformwerkzeugs an der Schließeinheit (1) verbleiben, und wobei
- eines der beiden Formunterteile (2.2, 3.2) lösbar mit dem Abtrieb des mindestens einen ersten Aktuators (13) und das andere der beiden Formunterteile (2.2, 3.2) lösbar mit einem Abtrieb des mindestens einen zweiten Aktuators (14) verbindbar ist, sodass der Wechsel des Blasformwerkzeugs vereinfacht ist, und wobei
- der mindestens eine erste Aktuator (13) und der mindestens eine zweite Aktuator (14) in der ersten Bewegungsrichtung (17) gegeneinander beweglich an der Schließeinheit (1) angeordnet sind.

2. Schließeinheit nach Anspruch 1, wobei eine ortsfeste Längsführung (8, 23) für die Aktuatoren vorgesehen ist.

3. Schließeinheit nach Anspruch 1 oder 2, wobei die Aktuatoren entlang einer ortsfesten Längsführung (8, 23) beweglich an der Schließeinheit angeordnet sind und eine erste Koppel (19) die Bewegung eines ersten Formträgers (4) der Schließeinheit (1) auf den mindestens einen ersten Aktuator (13) überträgt und eine zweite Koppel (20) die Bewegung eines zweiten Formträgers (5) der Schließeinheit (1) auf den mindestens einen zweiten Aktuator (14) überträgt.

4. Schließeinheit nach einem der vorhergehenden Ansprüche 2 oder 3, wobei entlang der ortsfesten Führung der erste Formträger (4) und der zweite Formträger (5) verschieblich geführt sind, und wobei
- diese ortsfeste Führung als die ortsfeste Längsführung (8) für die Aktuatoren (13, 14) verwendet wird, ODER
- eine separate ortsfeste Längsführung (23) für die Aktuatoren (13, 14) vorgesehen ist.

5. Schließeinheit nach einem der vorhergehenden Ansprüche, wobei die Aktuatoren (13, 14) derart eingerichtet sind, dass sie das Formunterteil (2.2, 3.2) in der zweiten Bewegungsrichtung (18) linear zwischen dem Offenzustand und dem Schließzustand hin und her bewegen, wobei insbesondere
- die Aktuatoren (13, 14) als fluidbetriebene Arbeitszylinder ausgebildet sind, ODER
- jeder Aktuator (13, 14) ein Schubkurbelgetriebe ist, das eine Drehbewegung in eine oszillierende Schubbewegung in der zweiten Bewegungsrichtung (18) umformt.

6. Schließeinheit nach einem der vorhergehenden Ansprüche, wobei die Aktuatoren (13, 14) unterhalb der Formunterteile (2.2, 3.2) angeordnet sind.

7. Schließeinheit nach einem der vorhergehenden Ansprüche, wobei mittels der lösbaren Verbindung zwischen Aktuator (13, 14) und Formunterteil (2.2, 3.2) eine definierte Schnittstelle für die Kraftübertragung geschaffen ist, um die Verbindung zwischen Aktuator und Formunterteil schnell lösen und wieder herstellen zu können.

8. Schließeinheit nach einem der vorhergehenden Ansprüche, wobei die Kupplung (15, 16) als schaltbare, kraft- oder formschlüssige Kupplung ausgeführt ist, insbesondere als elektromagnetische Kupplung.

9. Schließeinheit nach Anspruch 1 oder 2, wobei sich der mindestens eine erste Aktuator (13) synchron mit einem ersten Formträger (4) der Schließeinheit (1) bewegt und sich der mindestens eine zweite Aktuator (14) synchron mit einem zweiten Formträger (5) der Schließeinheit (1) bewegt.

10. Schließeinheit nach einem der vorhergehenden Ansprüche, wobei
- an dem ersten Formträger (4) der mindestens eine erste Aktuator (13) unmittelbar angeordnet ist und an dem zweiten Formträger (5) der mindestens eine zweite Aktuator (14) unmittelbar angeordnet ist, ODER wobei
- an dem ersten Formträger (4) eine Befestigungskonsole (11) zur mittelbaren Befestigung des mindestens einen ersten Aktuators (13) angeordnet ist und an dem zweiten Formträger (5) eine Befestigungskonsole (12) zur mittelbaren Befestigung des mindestens einen zweiten Aktuators (14) angeordnet ist.

11. Schließeinheit nach dem vorhergehenden Anspruch, wobei die Befestigungskonsolen (11,12) jeweils an der Unterseite an dem ersten Formträger (4) und an dem zweiten Formträger (5) befestigt sind, und wobei an jeder Befestigungskonsole (11, 12) jeweils unterhalb des Formunterteils ein erster Aktuator (13) bzw. ein zweiter Aktuator (14) befestigt ist.

12. Blasformmaschine mit einer Schließeinheit (1) gemäß einem der vorhergehenden Ansprüche.

## Claims

1. Clamping unit for a blow-moulding machine, wherein, in the blow-moulding machine, use is able to be made of at least one blow-moulding tool which has two-part tool halves (2, 3) and which, in the closed state of the two tool halves (2, 3), delimits a mould cavity with undercuts, and wherein the clamping unit (1) comprises a first and a second mould carrier (4, 5) on which the blow-moulding tool is arrangeable and to which the latter is releasably fastenable, and wherein a respective mould bottom part (2.2, 3.3) of the tool half, that is to say the lower base half, is lowerable in relation to a mould top part (2.1, 3.1) of the tool half, and wherein the two tool halves (2, 3) are movable back and forth between an open state and a closed state in a first movement direction (17), and wherein the clamping unit (1) comprises at least one first actuator (13) and at least one second actuator (14), and wherein the mould bottom part (2.2, 3.2) of each tool half is movable back and forth between an open state and a closed state in a second movement direction (18), which is different from the first movement direction (17), in relation to the mould top part (2.1, 3.1) by means of the at least one first actuator (13) or by means of the at least one second actuator (14), **characterized in that**
- the actuators (13, 14) are arranged on the clamping unit (1) and, in the case of a changeover of the blow-moulding tool, remain on the clamping unit (1), and wherein
- one of the two mould bottom parts (2.2, 3.2) is releasably connectable to the drive output of the at least one first actuator (13) and the other of the two mould bottom parts (2.2, 3.2) is releasably connectable to a drive output of the at least one second actuator (14), so that the changeover of the blow-moulding tool is simplified, and wherein
- the at least one first actuator (13) and the at least one second actuator (14) are arranged on the clamping unit (1) so as to be movable in relation to one another in the first movement direction (17).

2. Clamping unit according to Claim 1, wherein provision is made of a positionally fixed longitudinal guide (8, 23) for the actuators.

3. Clamping unit according to Claim 1 or 2, wherein the actuators are arranged on the clamping unit so as to be movable along a positionally fixed longitudinal guide (8, 23), and a first coupler (19) transmits the movement of a first mould carrier (4) of the clamping unit (1) to the at least one first actuator (13) and a second coupler (20) transmits the movement of a second mould carrier (5) of the clamping unit (1) to the at least one second actuator (14).

4. Clamping unit according to either of preceding Claims 2 and 3, wherein the first mould carrier (4) and the second mould carrier (5) are displaceably guided along the positionally fixed guide, and wherein
- said positionally fixed guide is used as the positionally fixed longitudinal guide (8) for the actuators (13, 14), OR
- provision is made of a separate positionally fixed longitudinal guide (23) for the actuators (13, 14).

5. Clamping unit according to one of preceding the claims, wherein the actuators (13, 14) are configured in such a way that they move the mould bottom part (2.2, 3.2) linearly back and forth between the open state and the closed state in the second movement direction (18), wherein in particular
- the actuators (13, 14) are in the form of fluid-operated working cylinders, OR
- each actuator (13, 14) is a slider-crank mechanism which converts a rotational movement into an oscillating sliding movement in the second movement direction (18).

6. Clamping unit according to one of preceding the claims, wherein the actuators (13, 14) are arranged below the mould bottom parts (2.2, 3.2).

7. Clamping unit according to one of preceding the claims, wherein, by means of the releasable connection between actuator (13, 14) and mould bottom part (2.2, 3.2), a defined interface for the force transmission is created in order for it to be possible for the connection between actuator and mould bottom part to be quickly released and reestablished.

8. Clamping unit according to one of preceding the claims, wherein the coupling (15, 16) is in the form of a switchable, force-fitting or form-fitting coupling, in particular in the form of an electromagnetic coupling.

9. Clamping unit according to Claim 1 or 2, wherein the at least one first actuator (13) moves synchronously with a first mould carrier (4) of the clamping unit (1) and the at least one second actuator (14) moves synchronously with a second mould carrier (5) of the clamping unit (1).

10. Clamping unit according to one of the preceding claims, wherein
- the at least one first actuator (13) is arranged directly on the first mould carrier (4) and the at least one second actuator (14) is arranged directly on the second mould carrier (5), OR wherein
- a fastening bracket (11) for indirect fastening of the at least one first actuator (13) is arranged on the first mould carrier (4) and a fastening bracket (12) for indirect fastening of the at least one second actuator (14) is arranged on the second mould carrier (5).

11. Clamping unit according to the preceding claim, wherein the fastening brackets (11, 12) are fastened, in each case at the bottom side, to the first mould carrier (4) and to the second mould carrier (5), and wherein, to each fastening console (11, 12), there is fastened, in each case below the mould bottom part, a first actuator (13) or a second actuator (14).

12. Blow-moulding machine having a clamping unit (1) according to one of the preceding claims.

## Revendications

1. Unité de fermeture pour une machine de moulage par soufflage, au moins un outil de moulage par soufflage avec des moitiés d'outil en deux parties (2, 3) étant apte à être utilisé dans la machine de moulage par soufflage, qui, à l'état fermé des deux moitiés d'outil (2, 3), délimite une cavité de moulage avec des contre-dépouilles, et l'unité de fermeture (1) comprenant un premier et un deuxième supports de moule (4, 5), sur lesquels l'outil de moulage par soufflage est apte à être disposé et fixé de manière amovible, et une partie inférieure de moule (2.2, 3.3) de la moitié de moule, c'est-à-dire la moitié de fond inférieure, étant apte à être abaissée par rapport à une partie supérieure de moule (2.1, 3. 1) de la moitié de moule, et dans laquelle les deux moitiés de moule (2, 3) sont aptes à être déplacées en va-et-vient entre un état ouvert et un état fermé dans une première direction de déplacement (17), l'unité de fermeture (1) comprenant au moins un premier actionneur (13) et au moins un deuxième actionneur (14), la partie inférieure de moule (2.2, 3.2) de chaque moitié de moule étant apte à être déplacée en va-et-vient par rapport à la partie supérieure de moule (2.1, 3.1) au moyen de l'au moins un premier actionneur (13) ou au moyen de l'au moins un deuxième actionneur (14) entre un état ouvert et un état fermé dans une deuxième direction de déplacement (18) qui est différente de la première direction de déplacement (17), **caractérisée en ce que**
- les actionneurs (13, 14) sont disposés sur l'unité de fermeture (1) et restent sur l'unité de fermeture (1) lors d'un changement d'outil de moulage par soufflage, et
- l'une des deux parties inférieures de moule (2.2, 3.2) est apte à être reliée de manière amovible à la sortie de l'au moins un premier actionneur (13) et l'autre des deux parties inférieures de moule (2.2, 3.2) est apte à être reliée de manière amovible à une sortie de l'au moins un deuxième actionneur (14), de sorte que le changement de l'outil de moulage par soufflage est simplifié, et
- l'au moins un premier actionneur (13) et l'au moins un deuxième actionneur (14) sont disposés sur l'unité de fermeture (1) de manière mobile l'un par rapport à l'autre dans la première direction de mouvement (17).

2. Unité de fermeture selon la revendication 1, dans laquelle il est prévu un guidage longitudinal fixe (8, 23) pour les actionneurs.

3. Unité de fermeture selon la revendication 1 ou 2, les actionneurs étant disposés de manière mobile sur l'unité de fermeture le long d'un guidage longitudinal fixe (8, 23) et une première bielle (19) transmettant le mouvement d'un premier support de moule (4) de l'unité de fermeture (1) à l'au moins un premier actionneur (13) et une deuxième bielle (20) transmettant le mouvement d'un deuxième support de moule (5) de l'unité de fermeture (1) à l'au moins un deuxième actionneur (14).

4. Unité de fermeture selon l'une des revendications précédentes 2 ou 3, dans laquelle le premier support de moule (4) et le deuxième support de moule (5) sont guidés en translation le long du guide fixe, et dans laquelle
- ce guide fixe est utilisé en tant que le guide longitudinal fixe (8) pour les actionneurs (13, 14), OU
- un guidage longitudinal fixe séparé (23) est prévu pour les actionneurs (13, 14).

5. Unité de fermeture selon l'une des revendications précédentes, dans laquelle les actionneurs (13, 14) sont agencés de telle sorte qu'ils déplacent la partie inférieure du moule (2.2, 3.2) dans la deuxième direction de déplacement (18) de manière linéaire en va-et-vient entre l'état ouvert et l'état fermé, dans laquelle notamment
- les actionneurs (13, 14) sont conçus sous la forme de cylindres de travail actionnés par un fluide, OU
- chaque actionneur (13, 14) est un mécanisme à manivelle de poussée qui transforme un mouvement de rotation en un mouvement de poussée oscillant dans la deuxième direction de mouvement (18).

6. Unité de fermeture selon l'une des revendications précédentes, dans laquelle les actionneurs (13, 14) sont disposés en dessous des parties inférieures du moule (2.2, 3.2) .

7. Unité de fermeture selon l'une des revendications précédentes, dans laquelle une interface définie pour la transmission de force est créée au moyen de la liaison amovible entre l'actionneur (13, 14) et la partie inférieure du moule (2.2, 3.2), afin de pouvoir rapidement détacher et rétablir la liaison entre l'actionneur et la partie inférieure du moule.

8. Unité de fermeture selon l'une des revendications précédentes, dans laquelle l'accouplement (15, 16) est réalisé sous la forme d'un accouplement commutable, à force ou à complémentarité de formes, en particulier sous la forme d'un accouplement électromagnétique.

9. Unité de fermeture selon la revendication 1 ou 2, dans laquelle l'au moins un premier actionneur (13) se déplace de manière synchrone avec un premier support de moule (4) de l'unité de fermeture (1) et l'au moins un deuxième actionneur (14) se déplace de manière synchrone avec un deuxième support de moule (5) de l'unité de fermeture (1).

10. Unité de fermeture selon l'une des revendications précédentes, dans laquelle
- l'au moins un premier actionneur (13) est disposé directement sur le premier support de moule (4) et l'au moins un deuxième actionneur (14) est disposé directement sur le deuxième support de moule (5), OU dans laquelle
- sur le premier support de moule (4) est disposée une console de fixation (11) pour la fixation indirecte de l'au moins un premier actionneur (13) et sur le deuxième support de moule (5) est disposée une console de fixation (12) pour la fixation indirecte de l'au moins un deuxième actionneur (14).

11. Unité de fermeture selon la revendication précédente, dans laquelle les consoles de fixation (11, 12) sont fixées respectivement sur la face inférieure au premier support de moule (4) et au deuxième support de moule (5), et dans laquelle un premier actionneur (13) ou un deuxième actionneur (14) est fixé respectivement sur chaque console de fixation (11, 12) en dessous de la partie inférieure du moule.

12. Machine de moulage par soufflage comportant une unité de fermeture (1) selon l'une quelconque des revendications précédentes.
